# EUROPÄISCHE PATENTSCHRIFT

(11) **EP 0 460 248 B1**
(45) Veröffentlichungstag und Bekanntmachung des Hinweises auf die Patenterteilung: **09.02.1994**
(21) Anmeldenummer: 90110556.9
(22) Anmeldetag: 05.06.1990
(51) Int. Cl.: C02F 1/48

(54) **Verfahren und Vorrichtung zur Behandlung von Wasser mit einem elekro-magnetischen Feld**
Process and apparatus for treating water with a electro-magnetic field
Procédé et dispositif de traitement de l'eau avec un champ électro-magnétique

(43) Veröffentlichungstag der Anmeldung: 11.12.1991
(73) Patentinhaber: Schulte, Hartmut Dipl.-Ing., D-63695 Glauburg (DE)
(72) Erfinder: Schulte, Hartmut Dipl.-Ing., D-63695 Glauburg (DE)
(74) Vertreter: Müller-Wolff, Thomas, Dipl.-Ing.

(56) Entgegenhaltungen:
- EP-A- 0 338 697
- EP-A- 0 357 102
- DE-U- 8 913 491
- DATABASE WPIL, Nr. 89-005846 [01], Derwent Publications Ltd, London (GB)

## Beschreibung

Die Erfindung betrifft ein Verfahren und eine Vorrichtung zur Behandlung von Wasser mit einem elektro-magnetischen Feld, bei dem über die Rohrmeßstrecke beidends durch gewickelte Induktionsspulen und je ein Magnetfeld erzeugt wird, dessen Intensität durch Steuerung der Frequenz von Impulsen, die mit einem Generator erzeugt werden, einstellbar ist.

Aus der EP-A-0 357 102 ist ein Gerät zur Behandlung von Flüssigkeiten bekannt, das die Ablagerung von Calciumkarbonat und ähnlichen Bestandteilen verhindern soll. Das Gerät besteht aus in einiger Distanz zueinander um ein Rohr gewickelten Spulen, die ein elektromagnetisches Feld erzeugen. Dabei werden in Abhängigkeit von der Strömungsgeschwindigkeit im Rohr Impulse gebildet, deren Amplitude und Frequenz zur Steuerung von zwei Magnetfeldern herangezogen werden. Die Magnetfeldlinien jedes der beiden in den Spulen erzeugten Magnetfeldes sind einander entgegengerichtet mit dem Ergebnis, daß in der Trennebene der beiden Felder die magnetischen Feldlinien senkrecht zur Durchflußrichtung des Flüssigkeitsstroms angeordnet sind.

Bei der Behandlung von Trinkwasser, das als Grundwasser aus tiefen Gesteinsschichten gewonnen wurde, ist auf das Calcium-Hydrogen-Karbonat zu achten, das als Verursacher von Kalksteinablagerungen und Verkrustungen in den Rohrwandungen bekannt ist. Die Gesamthärte des Wassers bildet sich dabei aus der sogenannten Karbonathärte (Summe der Ca- und Mg-Hydrogenkarbonate) und der Nichtkarbonathärte (gelöste Ca- und Mg-Verbindungen); mit anderen Worten: Je mehr Kalk sich löst, desto härter ist das Wasser.

Der sich bildende Kalksteinansatz kann verhindert werden :
- 1.: durch Ionenaustauscher, in dem die Calciumionen + das Calciumhydrogencarbonat aus dem Wasser genommen werden und in Natriumionen + Kochsalz ersetzt werden.
- 2.: durch eine spezielle "Dosierapparatur" (Impfanlage), in der Phosphatchemikalien zugegeben werden, die verhindern sollen, daß harte Ablagerungen entstehen. Der Kalk soll durch die Behandlungschemikalien gehalten werden bzw. mit dem chemischen Mittel einen Schlamm bilden, den der Wasserstrom austrägt.
- 3.: durch den "Kalkwächter" - elektronik - ohne Chemie, durch Anderung des Trennungsverhaltens von Calcium und Karbonat vor dem Eintritt in das System, also auf physikalische Art ; es entstehen dann amorphe, d.h. strukturlose Partikel von Kalk, die mit der im Wasser enthaltenen Kohlensäure im Gleichgewicht stehen.
Die Mengen und die Qualität des Wassers bleiben unverändert.

Bei der Wasseraufbereitung nach dem zuletzt genannten System handelt es sich um eine rein physikalische Einwirkung.
Elektronische Impulse mit negativer Spannung bewirken den Zerfall des Bikarbonats in ein nicht haftfähiges Calciumkarbonat, und zwar Pulver und Kohlensäure.
Das Kalkpulver ist über einen langen Zeitraum beständig und kann aus diesem Grund keine Härteschicht bilden.
Die Kalkteilchen werden wieder ausgespült; auch hohe Wassertemperaturen können diesen Effekt nicht beeinflussen. Vorhandene Verkrustungen werden durch Freisetzen geringerer Mengen von Kohlendioxyd im fließenden Wasser allmählich abgebaut.

Aufgabe der vorliegenden Erfindung ist es, ein Verfahren und eine Vorrichtung zur Behandlung von Wasser mit einem elektro-magnetischen Feld zu entwickeln, bei dem über die Rohrmeßstrecke beidends durch gewickelte Induktionspulen 13.1 und 13.2 je ein Magnetfeld erzeugt wird, dessen Intensität durch Steuerung der Frequenz der Impulse so einstellbar ist, daß die in dem Wasser enthaltenen Kalkpartikel in nicht haftfähige Kalziumcarbonate zerfallen. Eine Vorrichtung zur Durchführung des Verfahrens soll die Steuerung der Impulse in einfacher Weise ohne Meßung der Strömungsgeschwindigkeit ermöglichen.

Erfindungsgemäß wird diese Aufgabe durch die in den Patentansprüchen 1 und 6 angegebenen Merkmale gelöst.
Der Kalkwächter beeinflußt die im Wasser befindlichen Kalkmoleküle und bekämpft die beim Erhitzen entstehenden Verkrustungen in Boilern, Heizkesseln, Wasch- und Spülmaschinen, Kaffeemaschinen, Rohrleitungen, Armaturen usw.

Darüberhinaus wird das durch den Kalkwächter behandelte Wasser stabilisiert und spült die sich trennenden Verkrustungen mit dem Wasserfluß aus, ohne die Qualität des Wassers zu verändern.

Die Realisierung durch einfache Eingriffe in den Verfahrensgang bietet neben einer optimalen Wasseraufbereitung auch eine einfache Möglichkeit zu einer automatischen Steuerung der Kalkwasserbehandlung.
Dies ist später durch ein Beispiel erläutert.

Zu dem bereits vorstehend erwähnten Rampengenerator ist festzuhalten, daß dieser abschnittsweise in einzelnen Glieder faltbar ist und damit die Projektion der Glieder auf die gefaltete Länge einen Regelbereich für die Einwirkung liefert.

Diese Ausbildung ermöglicht durch engere oder weitere Faltung eine Anpassung an die gewünschte Frequenz.

Es ist weiter vorgesehen, daß durch die beidendig angeordneten Spulen ein modifizierter Wechselstrom mit einer über 0 bis 6 kHz reichenden Frequenz fließt.
Auch diese Einstellungsmöglichkeit sieht eine weitere Anpassung an die gegebenen Notwendigkeiten vor.

Die Leistung der Generatoren und die Leistung der Spannungssysteme werden derart zusammengeführt, daß dem Abgang aus dem personenbezogenen, d.h. leistungsbezogenen, Generator nachgeordnet der Abgang aus dem härtebezogenen Spannungsstromwandler einmündet und die Intensität beider Generatoren gemeinsam über einen Treiber,zum Ausgang, d.h. zu den beidends vorgesehenen Spulen führen, wobei die Magnetlinien gleichgerichtet sind.

Die Erfindung wird durch die beigefügte schematische Darstellung des Verfahrens näher erläutert.

Dem Netzanschluß 1 ist der Rampengenerator 5 und der Generator 6, der Treiber 7 sowie der vom Ausgang 8 in den Verteiler 8.1 führende Strang verbunden.
Von dem Verteiler 8.1 ausgehend führt dieser in die um die Rohrmeßstrecke 13 gewickelten Induktionsspulen 13.1 und 13.2.
Der Verbindungsleitung zwischen 8 und 8.1 ist die externe Fehlererkennung 12 angeschlossen.
Die Stelle der Zusammenführung von Generator und Spannungsstromwandler 10 führt in den Spannungsstromwandler 9, wobei dieser vom Schalter für die Härtekontrolle 4 mit Potentiometer 4.1 dem Spannungsstromwandler 9 verbunden ist, dessen Ausgang in die Stelle für die Zusammenführung von Generator und Spannungsstromwandler 10 führt, und in den additiven Abgang, gebildet aus 9 und 10, führt.
Über 10.1 mündet dieser in den Treiber 7.
Ebenfalls wird in 10 der Anschluß aus 11, d.h. von der internen Fehlererkennung, aufgenommen.
Die Verbindungsleitung des Netzanschlusses 2 führt einmal in den Spannungsstromwandler 9 und in den Generator 6,
wobei eine Doppeleinspeisung in 9 und 6 vorgesehen ist.

Vom Schalter für die Durchgangsleistung 3 mit Potentiometer 3.1 wird die Durchgangsleistung zur Frequenzwicklung 6.1 in den Generator 6 sowie in den Treiber 7 aufgegeben.

### Stückliste

- 1: Netzanschluß
- 2: Netzanschluß
- 3: Schalter für Durchgangsleistung
- 3.1: Potentiometer
- 4: Schalter für die Härtekontrolle
- 4.1: Potentiometer
- 5: Rampengenerator
- 6: Generator
- 6.1: Frequenz
- 7: Treiber (Niederfrequenzverstärker)
- 8: Ausgang
- 8.1: Verteiler
- 9: Spannungsstromwandler
- 10: Stelle für die Zusammenführung von Generator und Spannungsstromwandler
- 10.1: Frequenzleistung
- 11: interne Fehlererkennung
- 12: externe Fehlererkennung
- 13: Rohrmeßstrecke
- 13.1: gewickelte Induktionsspule
- 13.2: gewickelte Induktionsspule

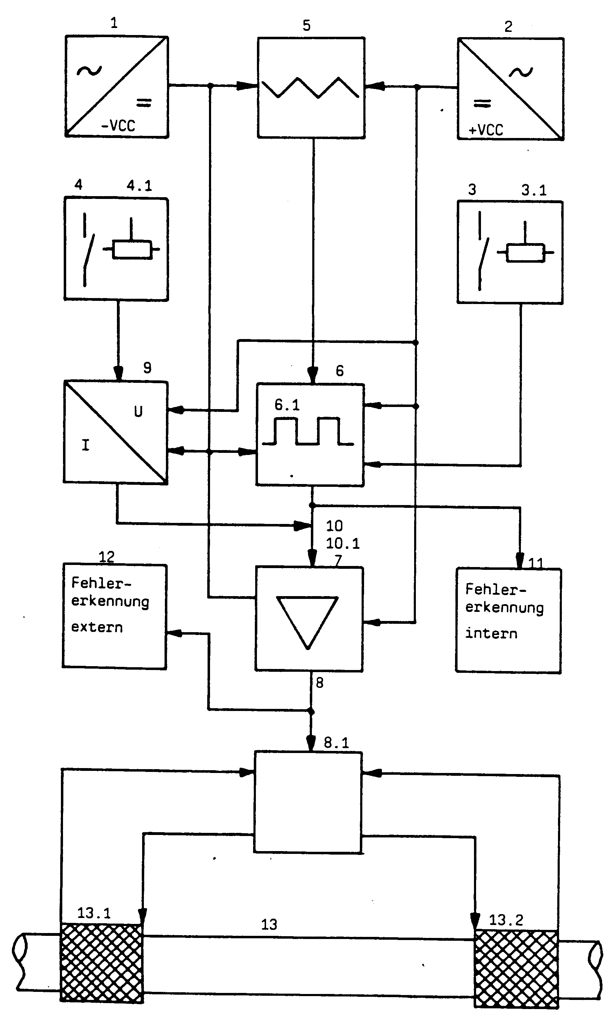

## Patentansprüche

1. Verfahren zur Behandlung von Wasser mit einem elektromagnetischen Feld, bei dem über die Rohrmeßstrecke (13) beidends durch gewickelte Induktionsspulen (13.1) und (13.2) je ein Magnetfeld erzeugt wird, dessen Intensität durch Steuerung der Frequenz von Impulsen, die mit einem Generator erzeugt werden, einstellbar ist,
dadurch gekennzeichnet,
daß die Intensität durch jeweils einen Schalter (3) mit zugeordnetem Potentiometer (3.1) für die Wasserdurchgangsleistungssteuerung sowie einen zweiten Schalter (4) für die Härtekontrolle mit zugeordnetem Potentiometer (4.1) für die Spannungsstromwandlung geregelt wird, wobei die sich ändernde Frequenz des Signals aus einem Rampengenerator mit der Frequenz des Signals aus dem Generator (6) addiert wird und daraus ein frequenzgesteuertes Signal erzeugt wird, das wiederum zu dem Signal aus dem Spannungsstromwandler zu einem Signal addiert wird, das eine Sammelfrequenz darstellt,
daß die vom Generator (6) ausgehende Frequenz (6.1) in den Niederfrequenzverstärker (7) über eine weiter einmündende Frequenz (10.1) führt und diese Sammelfrequenz (10) durch den Niederfrequenzverstärker (7) gewandelt wird,
und daß über einen Ausgang (8) bzw. einen Verteiler (8.1) beidends über die Länge der Rohrmeßstrecke begrenzende, wirkungsgleichgerichtete Windungen mit den Impulsen versorgt werden, deren elektro-magnetisches Feld die physikalischen Eigenschaften der durchfließenden Frequenz in Abhängigkeit von der Einstellung der Schalter (3) und 4) ändert, wobei der Ableitung aus dem Generator (6) die Ableitung aus dem härtebezogenen Spannungsstromwandler (9) nachgeordnet ist und sich die Ableitung (10.1) mit den Ableitungen aus dem Rampengenerator (5) und dem nachgeschalteten Generator (6) zu der Frequenz (6.1) addiert, wobei die Intensität beider Generatoren gemeinsam über den Niederfrequenzverstärker (7) an den Ausgang der Magnetlinien gegeben wird.

2. Verfahren nach Anspruch 1,
dadurch gekennzeichnet,
daß das rampenförmige Signal des Generators (5) periodisch auf den Regelbereich des Rechteckgenerators (6) einwirkt.

3. Verfahren nach Anspruch 1,
dadurch gekennzeichnet,
daß durch die beidendig angeordneten Spulen ein modifizierter Wechselstrom mit einer über 0 bis 6 kHz reichenden Frequenz fließt.

4. Verfahren nach Anspruch 1,
dadurch gekennzeichnet,
daß die Leistung der Generatoren (5 und 6) und die Leistung der Spannungssysteme (1, 2, 9) derart zusammengeführt wird, daß dem Abgang aus dem Rechteckgenerator für die Wasserdurchgangsleistung nachgeordnet der Abgang aus dem härtebezogenen Spannungsstromwandler (9) einmündet und die Intensität beider Generatoren gemeinsam über einen Niederfrequenzverstärker (7) zum Ausgang, d.h. zu den beidends vorgesehenen Spulen führen, wobei die Magnetlinien gleichgerichtet sind.

5. Verfahren nach den Ansprüchen 1 und 4,
dadurch gekennzeichnet,
daß die fortlaufend ermittelte Wasserausgangshärte und die momentane Durchflußleistung eine gemeinsame Führungsgröße für die selbständige Nachregulierung dieser Komponenten auf einen konstant zu haltenden Wert bilden.

6. Vorrichtung zur Durchführung des Verfahrens nach einem der Ansprüche 1 bis 5, bestehend aus einem Generator (5) mit rampenförmigem Signal, einem Generator (6) mit rechteckförmigem Signal und einem Spannungsstromwandler (9), wobei der Rechteckgenerator (6) mit einem Potentiometer (3) für die Wasserdurchgangsleistung und der Spannungsstromwandler (9) mit einem Potentiometer (4) für die Einstellung des Härtebereichs verbunden sind,
und einen Niederfrequenzverstärker (7) für die addierten Signale, der über einen Verteiler (8.1) mit zwei Induktionsspulen (13) verbunden ist, deren Wicklungen über ein Wasserrohr gelegt sind.

## Claims

1. Process for the treatment of water with an electromagnetic field, where in each case a magnetic field is generated over the pipe measuring distance (13) by wound induction coils (13.1) and (13.2) at both ends, the intensity of which field can be adjusted by controlling the frequency of pulses which are generated by a generator,
characterized in that the intensity is regulated by in each case a switch (3) with associated potentiometer (3.1) for the water-passage power control as well as a second switch (4) for the hardness control with associated potentiometer (4.1) for the voltage current conversion, whereby the altering frequency of the signal from a ramp generator is added to the frequency of the signal from the generator (6) and a frequency-controlled signal is generated therefrom, which in turn is added to the signal from the voltage current converter to form a signal which represents a collective frequency,
in that the frequency (6.1) issuing from the generator (6) leads into the low-frequency amplifier (7) by way of a further inflowing frequency (10.1) and this collective frequency (10) [sic] is converted by the low-frequency amplifier (7),
and in that action-rectified turns, limiting the measuring distance between both ends of the length of the pipe are supplied with the pulses by way of an output (8) or a distributor (8.1), the electromagnetic field of which pulses [sic] the physical properties of the through-flow frequency in dependence upon the adjustment of the switches, the output (10.1) of which adds to the outputs from the ramp generator (5) and the after-connected generator (6) to form the frequency (6.1), is provided and leads over the distance (10.2) to the driver (7).

2. Process according to claim 1,
characterized in that the ramp-shaped signal of the generator (5) periodically acts on the control region of the square-wave generator (6).

3. Process according to claim 1,
characterized in that a modified alternating current with a frequency reaching over O to 6 kHz flows through the coils arranged at both ends.

4. Process according to claim 1,
characterized in that the power of the generators (5 and 6) and the power of the voltage systems (1, 2, 9) are concentrated in such a way that after the outflow from the square-wave generator for the water-passage power, the outflow flows from the hardness-related voltage current converter (9) and the intensity of both generators together lead by way of a low-frequency amplifier (7) to the output, i.e. to the coils provided at both ends, whereby the magnetic lines are rectified.

5. Process according to claims 1 and 4,
characterized in that the continuously determined water output hardness and the instantaneous rate of flow form a common reference input variable for the independent subsequent regulation of these components to a value to be kept constant.

6. Device for carrying out the process according to one of claims 1 to 5, consisting of a generator (5) with ramp-shaped signal, a generator (6) with rectangular signal and a voltage current converter (9), whereby the square-wave generator (6) is connected to a potentiometer (3) for the water-passage power and the voltage current converter (9) is connected to a potentiometer (4) for the adjustment of the hardness region, and a low-frequency amplifier (7) for the added signals which is connected by way of a distributor (8.1) to two induction coils (13), the windings of which are placed over a water pipe.

## Revendications

1. Procédé de traitement de l'eau avec un champ électromagnétique, selon lequel des bobines d'induction enroulées (13.1 et 13.2) produisent respectivement des deux côtés sur le segment (13) de mesure d'un tube, des champs magnétiques respectifs dont l'intensité est réglable au moyen d'une commande de la fréquence d'impulsions, qui sont produites par un générateur,
caractérisé en ce
que l'intensité est réglée respectivement par un interrupteur (3) auquel est associé un potentiomètre (3.1) pour la commande du débit de l'eau ainsi que respectivement par un second interrupteur (4) pour la commande de la dureté, auquel est associé un potentiomètre (4.1) pour la conversion tension/courant, la fréquence variable du signal délivré par un générateur de signaux en rampe étant ajoutée à la fréquence du signal délivré par le générateur (6) alors qu'à partir de là est produit un signal, dont la fréquence est commandée et qui est à nouveau ajouté au signal délivré par le convertisseur tension-courant pour former un signal qui représente une fréquence commune,
que la fréquence (6.1) délivrée par le générateur (6) est introduite dans l'amplificateur des basses fréquences (7) par l'intermédiaire d'une ligne (10.1) aboutissant en outre à cet amplificateur et que cette fréquence commune (10) est convertie par l'amplificateur des basses fréquences (7), et que des spires, dont l'effet est redressé et qui réalisent une limitation des deux côtés de la section de mesure du tube, sont alimentées par l'intermédiaire de la sortie (8) ou d'un répartiteur (8.1) par les impulsions, dont le champ électromagnétique fournit les caractéristiques physiques de la fréquence transmise en fonction du réglage de l'interrupteur (3 et 4), le signal délivré par le générateur (6) étant associé au signal délivré par le convertisseur tension-courant (9) spécifique à la dureté, les signaux (10.1) ainsi que les signaux délivrés par le générateur de signaux en rampe (5) et par le générateur aval (6) étant ajoutés à la fréquence (6.1) de sorte que l'intensité des deux générateurs est fournie en commun à la sortie par l'intermédiaire de l'amplificateur des basses fréquences (7) pour redresser les lignes de champ magnétique.

2. Procédé selon la revendication 1, caractérisé en ce
que le signal en rampe du générateur (5) agit périodiquement sur la plage de régulation du générateur de signaux rectangulaires (6).

3. Procédé selon la revendication 1, caractérisé en ce
qu'un courant alternatif modifié possédant une fréquence s'étendant d'une valeur supérieure à 0 jusqu'à 6 kHz circule dans les bobines disposées des deux côtés.

4. Procédé selon la revendication 1, caractérisé en ce
que la puissance des générateurs (5 et 6) et la puissance des systèmes de production de tension (1, 2, 9) sont réunies, que la sortie du convertisseur de tension courant (9) qui est associée à la dureté est raccordée en aval à la sortie du générateur de signaux rectangulaires pour le débit d'eau, et les intensités des deux générateurs sont envoyées en commun par l'intermédiaire d'un amplifica- teur des basses fréquences (7) à la sortie, c'est-à-dire aux bobines prévues aux deux extrémités, auquel cas les lignes magnétiques sont redressées.

5. Procédé selon les revendications 1 et 4, caractérisé en ce
que la dureté de sortie de l'eau, qui est déterminée en permanence, et le débit instantané constituent une grandeur de référence commune pour la post-régulation automatique de ces composantes sur une valeur devant être maintenue constante.

6. Dispositif pour la mise en oeuvre du procédé selon les revendications 1 à 5, constitué par un générateur (5) délivrant un signal en forme de rampe, un générateur (6) délivrant un signal de forme rectangulaire et un convertisseur tension - courant (9), le générateur de signaux rectangulaires (6) étant raccordé à un potentiomètre (3) pour le débit de l'eau et au convertisseur tension - courant (9) équipé d'un potentiomètre (4), pour le réglage de la gamme de duretés, et
un amplificateur des basses fréquences (7) pour les signaux additionnés, qui est raccordé par l'intermédiaire d'un répartiteur (8.1) à deux bobines d'induction (13) et dont les enroulements sont disposés sur un tube de circulation d'eau.
